# EUROPÄISCHE PATENTANMELDUNG

(11) **EP 4 279 560 A1**
(43) Veröffentlichungstag der Anmeldung: **22.11.2023**
(21) Anmeldenummer: 23170933.8
(22) Anmeldetag: 02.05.2023
(51) Int. Cl.: C09J 183/08, C09J 183/12

(54) **WÄSSRIGE AMINOSILOXAN-HÄRTER FÜR MASSEN FÜR KLEBEZWECKE, ENTSPRECHENDE MASSEN UND DAMIT VERBUNDENE VERWENDUNGEN UND VERFAHREN**

(30) Priorität: 18.05.2022 DE 102022112462; 28.04.2023 DE 102023111046
(71) Anmelder: fischerwerke GmbH & Co. KG, 72178 Waldachtal (DE)
(72) Erfinder: Arnold, Julia, 79110 Freiburg (DE); Vogel, Martin, 79183 Waldkirch (DE); Ankermann, Carmen, 79346 Endingen a.K. (DE)
(74) Vertreter: Suchy, Ulrich Johannes

(57) **Zusammenfassung**

Die Erfindung betrifft mehrkomponentige siloxanbasierte Massen für Klebezwecke zum Verkleben von Gegenständen miteinander, insbesondere im technischen Bereich, im Heimwerkerbereich oder im Bauwesen Heimwerker- oder vorzugsweise Bauwesen, welcher neben Wasser oligomerisierte und lagerstabile Si-gebundene hydrolysierbare Gruppen tragende Aminosiloxane umfasst, und weitere damit verbundene Erfindungsgegenstände, wie eine entsprechende mehrkomponentige Masse für Klebezwecke, welche die genannte Härterkomponente und eine (damit) zu härtende im wesentlichen wasserfreie, wasserhydrolysierbare, ebenfalls Si-gebundene hydrolysierbare Gruppen tragende Siloxankomponente beinhaltet, Verfahren zum Verkleben von Oberflächen und Gegenständen damit, wie sie vorzugsweise in der Beschreibung oder auch in ein oder mehreren Ansprüchen definiert sind.

## Beschreibung

Die Erfindung betrifft einen wasserhaltigen Härter (nachfolgend auch als Komponente (B) bezeichnet) für ein mehrkomponentiges sil(ox)anbasiertes Klebstoffsystem, insbesondere für den technischen Bereich, das Heimwerker- und/oder vorzugsweise das Bauwesen, wobei der Härter neben Wasser (monomere und/oder oligomere) Aminosil(ox)ane (was insbesondere Aminoalkylsil(ox)ane bedeutet), die jeweils ein oder mehrere Si-gebundene hydrolysierbare Gruppen und/oder ein oder mehrere Silanolgruppen tragen, umfasst (vorzugsweise als lagerstabil charakterisierbar); und insbesondere weitere damit verbundene Erfindungsgegenstände, wie ein entsprechendes mehrkomponentiges sil(ox)anbasiertes Klebstoffsystem, welches die genannte Härterkomponente und eine (damit) zu härtende (wasserfreie, wasserhydrolysier- und härtbare) mindestens eine Si-gebundene hydrolysierbare Gruppen tragende und wasserfreie sil(ox)anbasierte Bestandteile umfassende Komponente (nachfolgend auch als Komponente (A) bezeichnet) beinhaltet, Verwendungen des wasserhaltigen Härters und mehrkomponentigen sil(ox)anbasierten Klebstoffystems, Verfahren zum Verkleben von Oberflächen zu verklebender Substrate oder zum Beschichten von Substraten mittels eines solchen sil(ox)anbasierten Klebstoffsytems, und damit verwandte Erfindungsgegenstände, wie sie in der Beschreibung oder auch in ein oder mehreren der Ansprüche definiert sind.

Für gewöhnlich sind hydrolysierbare, Si-gebundene Gruppen tragende und/oder ein oder mehrere Silanolgruppen aufweisende Silane und Siloxane in Wasser nicht lagerstabil, da es zu deren Hydrolyse und Polymerisation unter mindestens teilweiser Bildung von höheren Siloxanen (Verbindungen mit Si-O-Si Bindungen, deren nicht in die Bindung zwischen Sauerstoff und Silicium eingehende freie Siliciumvalenzen durch Kohlenwasserstoffreste abgesättigt sind) kommt. Daher müssen solche hydrolysierbare Gruppen beinhaltende Silane oder Siloxane bei der Lagerung und Verwendung in mehrkomponentigen Massen für Klebezwecke sorgfältig von wasserhaltigen Bestandteilen und Komponenten getrennt aufbewahrt werden, d.h. in einer reaktionshemmend von der wasserhaltigen Komponente getrennten Komponente. Beispiele sind Zweikomponenten- und insbesondere Zweikammersysteme mit bei Lagerung verschlossenen Kammern, von denen eine die Komponente mit hydrolysierbaren Gruppen beinhaltet, die andere die wasserhaltige Komponente (Härterkomponente).

Grundsätzlich sind für unter Hydrolyse hydrolysierbarer Gruppen und/oder Silanolgruppen aufweisende und nachfolgender Kondensation unter Bildung von Silikonen (Poly(organo)siloxanen) aushärtbare sil(ox)anbasierte Klebstoffsysteme nur geringe Mengen an Wasser für die Aushärtungsreaktion nach Zusammenführung der Komponenten erforderlich. Die Bereitstellung eines wasserhaltigen Härters für derartige aus dem Stand der Technik bekannte Härtersysteme für sil(ox)anbasierte Systeme ist anspruchsvoll. Mit den gängigen Verhältnissen von Kammergrößen (beispielsweise im Bereich von 1:5 bis 5:1) der unterschiedlichen Komponenten für Kartuschen und Patronen erreicht man entweder nicht die exakt benötigte Stöchiometrie, oder man muss zusätzlich zur Erhöhung des Volumens der Härterkomponente (in der Regel die Leistungsfähigkeit beeinträchtigende) Weichmacher als Trägermedien einsetzen.

Es ist vorteilhaft, zur Härtung solcher sil(ox)anbasierten Systeme stöchiometrische Mengen Wasser einzusetzen, das heißt, pro 2 Mol hydrolysierbarer Gruppen ungefähr 1 Mol Wasser vorzusehen und in einem Bereich von ca. 0,7-1,3 Mol Wasser zur Härtung zu bleiben.

WO 2016/041625 A1 beschreibt die Verwendung und Herstellung oligomerer Amino-Siloxanderivate mit einem Rest an polymerisierbaren Restmethoxygruppen und/oder Silanolgruppen, die unter vollständiger Abdestillation und Entfernung im Vakuum von Methanol und Restmengen Katalysator und (sofern es nicht abreagiert hat) gegebenenfalls Wasser hergestellt werden. Diese werden in einer Härterkomponente zur Härtung von additionspolymerisationsbasierten Befestigungskunstmörtelsystemen im Falle von auf Epoxid- und/oder Isocyanatbasis beruhenden Reaktivkunststoffharzen zum Einmörteln von Verankerungsmitteln in Löcher oder Spalten beschrieben.

Es wurde nun überraschend gefunden, dass es möglich ist, eine *Härterkomponente* (z.B. Komponente (B)) für hydrolysierbare Gruppen tragende sil(ox)anbasierte Klebstoffsysteme (z.B. mit einer Komponente (A) in Form einer Si-gebundene hydrolysierbare Gruppen tragende und wasserfreie sil(ox)anbasierte Bestandteile umfassenden Komponente) bereitzustellen, wobei die Härterkomponente hydrolysierbare Gruppen und/oder Silanolgruppen tragende monomere und/oder oligomere Aminosil(ox)ane und Wasser (als eigentlichen Härter) beinhaltet. Hierbei ist die Härterkomponente über die Zeit stabil, und es kommt bei Lagerung zu keiner nennenswerten Viskositätserhöhung (keine weitere Oligomerisierung oder Polymersierung). Interessant hierbei ist, dass das Wasser als Härter in der Härterkomponente mit einem weiteren flüssigen und reaktiven Inhaltsstoff (den monomeren und/oder oligomeren Aminosil(ox)anen) in einer Komponente kombiniert vorliegen kann, ohne dass es zu einer unerwünschten Reaktion kommt.

Neben der guten Lagerbarkeit lässt sich hierdurch als Vorteil ein brauchbares Verhältnis der Volumina der Komponenten (Volumenverhältnis der Behältnisse der Komponenten zueinander), ohne dass eine Volumenergänzung durch Zugabe von Materialien wie Weichmachern (wie z.B. Poly[alkylenoxid], Phthtalsäureester, Adipinsäureester, Sebacinsäureester, Benzoesäureester (wie Alkylbenzoate), Glycerinester, Cyclohexandicarbonsäureester, Silikonöl, Zitronensäureester, Phosphorsäureester, Sulfonsäureester, Polyether, paraffinische Kohlenwasserstoffe oder dergleichen) in der Härterkomponente erforderlich wird, nennen. Außerdem kommt es beim Mischen der zu härtenden sil(ox)anbasierten Bestandteile umfassenden Komponente (z.B. Komponente (A)) mit der Härterkomponente (z.B. Komponente B) eine durch die Katalyse der Reaktion der Si-gebundene hydrolysierbare Gruppen und/oder Silanolgruppen tragenden Aminosil(ox)ane als Bestandteil bei der Vernetzung mit Hilfe des in der Härterkomponente enthaltenen Wassers zu einer weiteren Reaktionsverbesserung.

Die in der Härterkomponente enthaltenen Aminosil(ox)anverbindungen sind somit außerdem bei der Aushärtung solcher Systeme katalytisch wirksam. Durch die Beschleunigung der für die Aushärtung verantwortlichen Hydrolyse- und Kondensationreaktionen sorgt die Härterkomponente so nach dem Mischen mit der zu härtenden (z.B. (A)-)Komponente für eine Reaktionsverbesserung.

Die katalytische und vernetzende Wirkung führt weiter zur Ausbildung von partikulären, raumvernetzten und vor allem engmaschigen, harten Si-O-Si- Strukturen, wodurch beispielsweise die Vernetzungsdichte und die Glasübergangstemperatur nach dem Vernetzen erhältlicher Massen für Klebezwecke gesteigert werden können. Im Gegensatz zu Weichmachern in einer wasserhaltigen Komponente tragen die Aminosil(ox)ane mindestens teilweise zur Vernetzung als Co-Vernetzer bei und beeinträchtigen so nicht nur die Leistungsfähigkeit nicht, sondern tragen im Gegenteil sogar dazu bei und können diese verbessern und sind wie erwähnt außerdem katalytisch aktiv.

Als Aminosil(ox)ane (was insbesondere Amino (insbesondere C₁-C₇-) alkylsil(ox)ane bedeutet), die jeweils ein oder mehrere Si-gebundene hydrolysierbare Gruppen und/oder ein oder mehrere Silanolgruppen tragen, kommen freie monomere oder insbesondere durch mindestens teilweise Oligomerisierung monomerer Aminosil(ox)ane gebildete oligomere Aminosil(ox)ane für die Härterkomponente (insbesondere bei einem zweikomponentigen System Komponente (B)) in Frage. Letztere können auch durch mindestens teilweise Hydrolyse und Kondensation entstehen oder entstanden sein.

Bevorzugte Monomere, oder Edukte für die Herstellung vorteilhafter oligomerer Sil(ox)ane, umfassen N-(2-Aminoethyl)-3-aminopropyltri(m)ethoxysilan, N-(2-Aminoethyl)-3-aminopropylmethyl-di(m)ethoxysilan, 3-Aminopropyltri(m)ethoxysilan, N-Cyclohexyl-3-aminopropyltri(m)ethoxysilan, Phenylaminomethyltri(m)ethoxysilan, Phenylaminopropyltri(m)ethoxysilan, oder 3-[2-(2-Aminoethylamino)ethylamino]propyltri(m)ethoxysilan, oder Kombinationen von zwei oder mehr davon.

Die erfindungsgemäß umfassten oder verwendeten oligomeren wässrigen Aminosil(ox)ane können auch als Produkte der Co-Oligomerisierung insbesondere von ein oder mehreren der im vorstehenden Absatz genannten Monomere mit anderen funktionellen Silanen neben Aminogruppen tragenden Silanen, wie z.B. Vinylalkoxysilanen oder Mono-, Di- oder Trialkylalkoxysilanen, vorliegen. Die Benutzung solcher Co-Oligomerisierungsprodukte ist vorteilhaft, um das Eigenschaftsprofil der wässrigen Aminoalkylsiloxane zu variieren. oder beispielsweise durch Herstellung unter Verwendung von Alkoxytrialkylsilan, was ermöglicht, den Oligomerisierungsgrad einzustellen: Die Alkoxytrialkylsilane können, beispielsweise zu einem bestimmten Zeitpunkt oder in geringer Konzentration zugesetzt, einen Kettenabbruch bewirken. Bevorzugte Beispiele für derartige wässrige oligomere Siloxane sind Hydrosil^{®}2907 (amino- und vinylfunktional) oder Hydrosil^{®}2776 (diaminofunktional) oder Mischungen davon.

Sämtliche Siloxane, die in dem Siloxanoligomer vorliegen, können M-, D-, T- und/oder ferner (insbesondere teilweise) Q-Struktureinheiten enthalten. Zur genaueren Nomenklatur der Benennung solcher Siloxanstrukturen sei auf das "Römpp Chemielexikon" - Stichwort: Silicone - hingewiesen. Beispielsweise ergibt sich die Zusammensetzung der Siloxaneinheit unter Berücksichtigung der Tatsache, dass jedes Sauerstoffatom als Brückenglied zwischen je zwei Siliciumatomen liegt: R_{q}SiO_{(4-q)/2} (q=0, 1, 2, 3), d.h. dass eine Siloxaneinheit ein bis vier weitere Substituenten aufweisen kann, je nach Anzahl der frei gebliebenen Valenzen am Sauerstoff. Siloxaneinheiten können also mono-, di-, tri- und tetrafunktionell sein. In symbolischer Schreibweise stellt man dies durch die Buchstaben M (mono), D (di), T (tri) und Q (quatro) dar: [M]=R₃SiO_{1/2}, [D]=R₂SiO_{2/2}, [T]=RSiO_{3/2} und [Q]=SiO_{4/2}. Zur Veranschaulichung: Ein ausschließlich aus Q-Einheiten konstituiertes Netzwerk entspräche Quarzglas. Ein Silsesquioxan hätte n = 1,5.

Bei allen genannten Aminosil(ox)anen sind solche bevorzugt, die, jeweils mindestens teilweise, ein oder mehrere hydrolysierbare Gruppen enthalten oder die hydrolysierbare Gruppen und Silanolgruppen beinhalten. Die Aminosil(ox)ane können einzeln oder als Mischungen von zwei oder drei oder mehr der vor- und nachstehend genannten Typen derartiger Bestandteile vorliegen.

Besonders bevorzugt als Aminosil(ox)an ist ein Aminoalkylsil(ox)an in wässriger Lösung zu nennen, insbesondere ein Produkt mit der Markenbezeichnung SILQUEST VS142 (Momentive Performance Materials Inc.), welches Molekülstrukturen der Formel (H₂NCH₂CH₂CH₂SiO_{1,5}⁾ₐ (mit a > 1) beinhaltet, oder Dynasylan ^{®} Hydrosil 1151, 1153, 2627 oder 2909 oder insbesondere Dynasilan^{®} Hydrosil 2907 oder Hydrosil 2776 (Evonik Industries AG); oder eine Mischung von zwei oder mehr der genannten Markenprodukte.

Sil(ox)an oder "auf Sil(ox)anbasis" oder "sil(ox)anbasiert bedeutet in der vorliegenden Offenbarung allgemein, dass die betreffende Komponente unter die übrigen Definitionen fallende Silane (also Verbindungen ohne (Si-O-Si) -Anteile), Siloxane (also Verbindungen mit (Si-O-Si) -Anteilen) oder beide Verbindungstypen umfassende Bestandteile beinhaltet.

In einer besonders bevorzugten Ausführungsform enthalten die wässrigen Sil(ox)ane der Härtungskomponente keine Edukte (Silane) mehr, sondern ausschließlich Siloxane.

Als Bestandteil(e) für die zu härtende Komponente (bei einem zweikomponentigen System Komponente (A)) der erfindungsgemäßen sil(ox)anbasierten mehrkomponentigen Klebstoffsysteme, also als die eingangs genannte Si-gebundene hydrolysierbare Gruppen tragende wasserfreie sil(ox)anbasierte Bestandteile umfassende Komponente, finden vorzugsweise silanterminierte (Prä-) Polymere, die Si-gebundene hydrolysierbare (und damit unter Hydrolyse vernetzbare) Gruppen aufweisen, oder hydrolysierbare an Si gebundene Gruppen beinhaltende Silikonharze ( also zu den Silikonen gehörige Verbindungen) Verwendung.

Bei dem oder den silanterminierten (Prä-) Polymeren, die Si-gebundene hydrolysierbare Gruppen aufweisen, handelt es sich in erster Linie um (Prä-)Polymere in Form von
- Mono, Di- oder Trialkoxysilan-terminierten Polyethern (vorzugsweise des Ethylenglykols und/oder insbesondere des Propylenglykols), die am endständigen Sauerstoff des Polyetheranteils, vorzugsweise an beiden Enden, jeweils eine Gruppe der Teilformel (II)

   -C(=O)-NH-(CH₂)ₜ -Si(R^{1*}R^{2*}R^{3*}) (II)

   tragen, worin R^{1*}, R^{2*} und R^{3*} unabhängig voneinander Alkyl, insbesondere Ethyl oder in erster Linie Methyl, oder einen hydrolysierbaren Rest bedeuten, insbesondere Ethoxy oder in erster Linie Methoxy, mit der Maßgabe, dass mindestens einer bis zu drei dieser Reste einen hydrolysierbaren Rest bedeuten, insbesondere zwei dieser Reste einen hydrolysierbaren Rest bedeuten, und t = 1 bis 6, vorzugsweise 1 oder 3 ist. Besonders bevorzugt ist eine endständige Gruppe ausgewählt aus N-Triethoxysilylmethylcarbamoyl, N-Trimethoxysilylpropylcarbamoyl oder N-Dimethoxymethylsilylmethylcarbamoyl (-C(=O)-NH-CH₂-Si(Me)(OCH₃)₂). Vorzugsweise sind zwei oder drei Reste R^{1*}, R^{2*} und R^{3*} hydrolysierbare Reste; wobei die genannten Verbindungen vorteilhaft eine mittlere Molmasse von 2000 bis 20 000 Dalton, z.B. von 10 000 bis 14 000 aufweisen;
- MS-Polymeren, die aus Mono, Di- oder Trialkoxysilan-terminierten Polyethern (vorzugsweise des Ethylenglykols und/oder insbesondere des Propylenglykols) bestehen, die am endständigen Sauerstoff des Polyetheranteils, vorzugsweise an beiden Enden, jeweils eine Gruppe der Teilformel (III)

   -(CH₂)ₜ -Si(R^{1*}R^{2*}R^{3*}) (III)

   Tragen, worin R^{1*}, R^{2*} und R^{3*} unabhängig voneinander Alkyl, insbesondere Ethyl oder in erster Linie Methyl, oder einen hydrolysierbaren Rest bedeuten, insbesondere Ethoxy oder in erster Linie Methoxy, mit der Maßgabe, dass mindestens einer bis zu drei dieser Reste einen hydrolysierbaren Rest bedeuten, insbesondere zwei dieser Reste einen hydrolysierbaren Rest bedeuten, und t = 1 bis 6, vorzugsweise 3 ist (besonders bevorzugt);
- (ferner) Silanterminierte Polyurethan(präpolymer)e (SPUR), wie Polyurethanpräpolymere, (herstellbar durch Abreaktion von NCO-Gruppen tragenden Präpolymeren mit einem Edukt der Formel H₂N-(CH₂)ₜ-Si(R^{1*}R^{2*}R^{3*})), vorzugsweise mit mindestens einer Gruppe der Teilformel (IV)

   -NH-C(=O)-NH-(CH₂)ₜ -Si(R^{1*}R^{2*}R^{3*}) (IV)

   wobei im genannten Edukt und in Formel (IV) t, R^{1*}, R^{2*} und R^{3*} jeweils die oben für Teilformel (II) genannten Bedeutungen haben, und vorteilhaft mit einer mittleren Molmasse von 2000 bis 20 000 Dalton, z.B. von 10 000 bis 14 000;
- (ferner) Endgecappte Polydialkylsiloxane, wie endgecappte Polydialkyl(z.B. Polydimethyl)siloxane, wobei "endgecappt" bedeutet, dass die Verbindungen anstelle einer endständigen Hydroxygruppe des enthaltenen Polyalkylsiloxans jeweils eine Gruppe der Teilformel (V),

   -O-Si(R^{1**}R^{2**}R^{3**}) (V)

   tragen, worin R^{1**}, R^{2**} und R^{3**} unabhängig voneinander Alkyl, insbesondere Ethyl oder in erster Linie Methyl, oder einen hydrolysierbaren Rest bedeuten, insbesondere Ethoxy, Acetoxy- oder in erster Linie Methoxy, mit der Maßgabe, dass mindestens einer dieser Reste einen hydrolysierbaren Rest bedeutet, insbesondere zwei oder vorzugsweise alle drei Reste einen hydrolysierbaren Rest bedeuten. Besonders bevorzugt ist Triethoxysilyloxy oder insbesondere Trimethoxysilyloxy (-O-Si-(OCH₃)₃) und Dimethoxymethylsilyloxy (-O-Si(Me)(OCH₃)₂). Vorzugsweise sind zwei oder drei Reste R¹, R² und R³ hydrolysierbare Reste.

Bei den hydrolysierbare an Si gebundene Gruppen beinhaltenden Silikonharzen handelt es sich insbesondere um mindestens eine hydrolysierbare an Si gebundene Gruppe beinhaltende Silikonharze in Form von Phenyl- und/oder Methylsilikonharzen, welche bezogen auf die Masse an Silikonharz (b) insgesamt (= 100 %), 0 bis 65 % Struktureinheiten mit phenylfunktionellen T-Einheiten, 0 bis 95 % an methylfunktionellen T- und/oder D-, insbesondere T-Einheiten und 5 bis 40 % hydrolysierbare, an Si gebundene Gruppen beinhalten, daneben noch Q- und M-Einheiten enthalten sein können, und außerdem vorzugsweise eine mittlere Molmasse von 400 bis 3500 Dalton, beispielsweise von 800 bis 1300 Dalton, aufweisen.

Als Silanterminierte Polyether kommen beispielsweise und insbesondere folgende in Betracht: silanterminiertes Polypropylenglykolpolymer mit endständigen N-Dimethoxy-(methyl)silylmethylcarbamoylmethylgruppen (z.B. Geniosil^{®} STP-E10; Wacker Chemie AG, München, wie alle nachfolgenden Geniosile), Polypropylenglykol mit endständigen N-Trimethoxysilylpropylcarbamoylgruppen (z.B. Geniosil^{®} STP-E15), silanterminiertes Polypropylenglykolpolymer mit endständigen N-Dimethoxymethylsilylmethylcarbamolygruppen (z.B. Geniosil^{®} STP-E30), Propylenglykol mit endständigen N-Trimethoxysilylpropylcarbamoylgruppen (z.B. Geniosil^{®} STP-E35), Geniosil^{®} XM 20, Geniosil^{®} XM 25, Geniosil^{®} STP-E 140, Geniosil^{®} XT 120, Geniosil^{®} XT 55, Geniosil^{®} ZK 23, Geniosil^{®} ZK 26, oder Geniosil^{®} WP1.

Als silanterminierte Urethan(prä)polymere (SPUR - silanterminierte Polyurethane) kommen beispielsweise und insbesondere die folgenden in Betracht: Desmoseal^{®} S XP 2636, -S XP 2749, -S XP 2774, -S XP 2821, -S XP 2458, -S 2876 (Covestro Deutschland AG, Leverkusen).

Als endgecappte Polydialkylsiloxane kommen beispielsweise und insbesondere solche verwendet werden, die in US 6,643,340 oder EP 3 569 649 A1 offenbart sind.

Als mindestens eine hydrolysierbare an Si gebundene Gruppe beinhaltende Silikonharze in Form von Phenyl- und/oder Methylsilikonharzen kommen insbesondere und beispielsweise SILRES^{®} IC 368 oder SILRES^{®} MSE 100, ferner SILRESO IC 836, SILRESO IC 232, SILRESO K, SILRESO IC 678, jeweils von Wacker Chemie AG, in Betracht.

Geeignete silanterminierte Polymere mit Si-gebundenen hydrolysierbaren Gruppen finden sich beispielsweise auch in DE 10 2011 081 264 A1, auf die hier Bezug genommen wird einerseits hinsichtlich der darin vermittelten Informationen für den Fachmann, andererseits zum Zwecke der Beschreibung der darin genannten silanvernetzenden Präpolymeren. Bevorzugt sind auch Gemische von aus Polyethern (vorzugsweise des Ethylenglykols und/oder insbesondere des Propylenglykols) von Mono, Di- oder Trialkoxysilan-terminierten Polyethern, wie oben definiert, und mindestens eine hydrolysierbare an Si gebunden beinhaltende Silikonharze in Form von Phenyl- und/oder Methylsilikonharzen, ebenfalls wie oben genannt. Ein Beispiel für eine derartige Reaktivabmischung ist käuflich unter dem Namen GENIOSIL^{®} XB-502 von Wacker Chemie AG erhältlich.

Sehr bevorzugt ist ein Mehrkomponentiges sil(ox)anbasiertes Klebstoffsytem, welches eine Härterkomponente (B) und eine auch oder nur mit dem im Härter enthaltenen Wasser zu härtende Si-gebundene hydrolysierbare Gruppen tragende und wasserfreie sil(ox)anbasierte Bestandteile umfassende Komponente (A) beinhaltet, wobei die Härterkomponente neben Wasser ein Aminosil(ox)an, das jeweils ein oder mehrere Si-gebundene hydrolysierbare Gruppen und/oder ein oder mehrere Silanolgruppen trägt, umfasst, dadurch gekennzeichnet, dass Komponente (A) ein Gemisch (Reaktivabmischung) von (i) Mono-, Di- oder Trialkoxysilanterminierten Polyethern des Ethylenglykols und/oder des Propylenglykols und (ii) von mindestens eine hydrolysierbare an Si gebundene Gruppen beinhaltenden Silikonharzen in Form von Phenyl- und/oder Methylsilikonharzen beinhaltet. Ein Beispiel für eine derartige Reaktivabmischung für Komponente (A) ist käuflich unter dem Namen GENIOSILO XB-502 von Wacker Chemie AG erhältlich.

Als hydrolysierbare Reste oder Gruppen sind bei allen "silanterminierten Verbindungen" und Siloxanen Halogenreste (Halogen, wie Chloro; sehr "ferner"), Ketoximate, Acyloxy (insbesondere C₁-C₇Alkanoyloxy), oder insbesondere Alkyloxy (Alkoxy), insbesondere C₁-C₇-Alkyloxy, gebunden. Als hydrolysierbare Reste sind insbesondere an das Si gebundene Methoxy, Ethoxy oder Propoxygruppen vorgesehen, vorzugsweise Methoxy und/oder Ethoxy, insbesondere Methoxy.

Das oder die silanterminierten Polymere, die hydrolysierbare Gruppen aufweisen, (durch Hydrolyse vernetzbare Gruppen aufweisenden Polymer(e)) haben vorzugsweise eine Viskosität im Bereich von 100 bis 500.000, beispielsweise 100 bis 120.000, insbesondere 1000 bis 35000 mPa·s (gemessen mit einem Brookfield Rotationsviskosimeter, Spindel 7 bei 10 U/min), bei Raumtemperatur (23 °C), bezogen auf das silanterminierte Polymer selbst.

"Beinhalten" oder "umfassen" oder "enthalten" oder "aufweisen" bedeutet, dass neben den genannten Komponenten oder Merkmalen noch andere vorhanden sein können, steht also für eine nicht abschließende Aufzählung, im Gegensatz zu "bestehen aus", das eine abschließende Aufzählung der bei seiner Verwendung aufgezählten Komponenten oder Merkmale bedeutet und in den Varianten der Erfindung anstelle von "beinhalten" und "umfassen" gesetzt werden kann. "Tragen" bedeutet, dass die genannten Reste kovalent am jeweiligen Molekültyp gebunden vorliegen.

Wo das Attribut "ferner" erwähnt wird, bedeutet dies, dass Merkmale ohne dieses Attribut stärker bevorzugt sein können.

Wo (beispielsweise für Gewichtsangaben, Mengenverhältnisse, Temperaturen oder Zeiten) Zahlenwerte als Merkmale angegeben werden, sind diese so zu verstehen, dass sie mit üblichen Fehlerabweichungen versehen sind, also quasi mit "etwa" davor zu lesen sind, also beispielsweise ein Zahlenwert um ± 10 % , vorzugsweise um ± 5 %, vom genannten Wert abweichen kann, beispielsweise um ± 2 % oder um ± 0,5 %.

Prozentangaben (%) beziehen sich, sofern nichts anderes angegeben ist, auf die Gesamtmasse der Bestandteile aller Komponenten (außer der Verpackung, wie Folien oder Kartuschenwände oder dergleichen), also die (Einzelmasse des jeweiligen Bestandteiles geteilt durch die Gesamtmasse) x 100, oder in den Beispielen auf die jeweilige Komponente (A) oder (B). Sie werden als "%" angegeben, wobei die Angaben durch Gew.-% ersetzt werden können.

"Und/oder" bedeutet, dass die genannten Merkmale/Substanzen jeweils alleine oder in Kombination von zwei oder mehr der jeweils genannten Merkmale/Substanzen vorliegen können.

Unter Si-gebundenen hydrolysierbaren Gruppen sind insbesondere solche Gruppen zu verstehen, die ausgewählt sind aus der Gruppe, die aus (sehr ferner) Halogen, wie Chloro; oder vorzugsweise Acyloxy, Aryloxy, Aralkyloxy (= Arylalkyloxy) und insbesondere Alkoxy, stärker vorzugsweise C₁-C₇-Alkyloxy, besteht. Besonders bevorzugt ist Propoxy, Ethoxy oder Methoxy, vor allem Methoxy oder Ethoxy.

(M)ethoxy steht für Methoxy, Ethoxy oder Methoxy und Ethoxy (als Gemisch).

Bei sekundärem Amino handelt es sich beispielsweise um einen Rest der Formel Q-NH-, in dem Q einen unsubstituierten oder substituierten Rest ausgewählt aus C₁-C₇-Alkyl (insbesondere Methyl, Ethyl oder Propyl), C₃-C₇-Cycloalkyl (insbesondere Cyclohexyl) oder C₆-C₁₂-Aryl (insbesondere Phenyl) bedeutet. Als Substituenten dieser Reste können ferner Amino, Thio oder Hydroxy vorkommen.

Wo Heteroatome erwähnt werden (auch bei heteroaliphatischen oder heterocycloaliphatischen Verbindungen, die beispielsweise 1 bis 20 Ketten- bzw. 3 bis 20 Ringatome aufweisen können), handelt es sich vorzugsweise um 1 bis 3 Heteroatome, die unabhängig voneinander aus O, S und N (letzteres vorzugsweise als NH oder (C₁-C₇-Alkyl)N) ausgewählt sind.

Die Erfindung betrifft in einer Ausführungsform (Variante der Erfindung) einen eingangs genannten und vor- und nachstehend präziser definierten wasserhaltigen Härter für ein vor- und nachstehend näher beschriebenes sil(ox)anbasiertes mehrkomponentiges Klebstoffsystem, insbesondere für Klebezwecke, ferner jedoch auch für Beschichtungszwecke; vor allem im technischen Bereich, im Heimwerker- und/oder im Bauwesen), wobei der Härter ein oder mehrere Aminosil(ox)ane (was insbesondere Aminoalkylsil(ox)an(e) bedeutet), die jeweils ein oder mehrere Si-gebundene hydrolysierbare Gruppen und/oder ein oder mehrere Silanolgruppen tragen, und Wasser umfasst, und insbesondere als Härterkomponente (Komponente (B)) für ein derartiges Klebstoffystem mit zwei Komponenten vorgesehen ist, wobei der Härter zur Härtung einer Si-gebundene hydrolysierbare Gruppen tragende und wasserfreie sil(ox)anbasierte Bestandteile umfassenden Komponente (Komponente (A), vorgesehen oder eingerichtet ist. Die Härterkomponente enthält Wasser.

Eine weitere Ausführungsform der Erfindung betrifft ein mehrkomponentiges, insbesondere zweikomponentiges sil(ox)anbasiertes Klebstoffsystem (also ein entsprechendes mehrkomponentiges Klebstoffsystem oder Kit) (das, wo immer in dieser Offenbarung es erwähnt wird, durch Wasser unter Hydrolyse und Kondensation aushärtbar ist), insbesondere für Beschichtungs- oder vor allem für Klebezwecke im technischen Bereich, im Heimwerker- und/oder im Bauwesen, welches
- eine zu härtende mindestens eine Si-gebundene hydrolysierbare Gruppe tragende (und im wesentlichen oder ganz) wasserfreie sil(ox)anbasierte Bestandteile umfassende Komponente(A) ; und
- eine Härterkomponente (Komponente (B)) beinhaltet, wobei die Härterkomponente Aminosil(ox)ane (was insbesondere Aminoalkylsil(ox)ane bedeutet), die jeweils ein oder mehrere Si-gebundene hydrolysierbare Gruppen und/oder ein oder mehrere Silanolgruppen tragen, und Wasser beinhaltet.

Eine weitere Ausführungsform der Erfindung betrifft die Verwendung eines vor- und nachstehend definierten Härters oder insbesondere mehrkomponentigen sil(ox)anbasierten Klebstoffsystems beim oder zum Verkleben von Gegenständen miteinander, insbesondere im technischen Bereich, im Heimwerkerbereich und/oder im Bauwesen.

Eine weitere Ausführungsform der Erfindung betrifft ein Verfahren zum Verkleben von Oberflächen zu verklebender Substrate, beinhaltend, dass eine Härterkomponente und eine zu härtende Si-gebundene hydrolysierbare Gruppen tragende und im wesentlichen wasserfreie sil(ox)anbasierte Bestandteile umfassende Komponente eines mehrkomponentigen sil(ox)anbasierten Klebstoffsystems wie vor- und nachstehend definiert gemischt und gleichzeitig oder anschließend unter mindestens teilweiser Bedeckung mindestens einer der zu verklebenden Oberflächen auf diese aufgebracht wird, die zu verklebenden Oberflächen dann miteinander mindestens teilweise in Kontakt gebracht werden und das Klebstoffsystem aushärten gelassen wird.

Bei den zu verklebenden Substraten bzw. Gegenständen kann es sich dabei grundsätzlich um solche beliebiger Art handeln, insbesondere um miteinander zu verklebende Substrate bzw. Gegenstände, insbesondere im technischen Bereich, im Heimwerkerbereich und/oder im Bauwesen.

Vorzugsweise können mit den erfindungsgemäßen Klebstoffsystemen hochfeste, konstruktive Verklebungen ausgeführt werden, wie sie z.B. im Fahrzeug- und Maschinenbau, der Luft- und Raumfahrttechnik, der Bautechnik usw. vorkommen und mit hochfesten (und insbesondere auch nichtsaugenden) Substraten wie Stahl, Aluminium, Metall-Legierungen, Glas, Beton, Carbon- oder Glasfaserlamellen oder dergleichen ausgeführt werden. Ferner können auch Verklebungen leichter Gegenstände ausgeführt werden, beispielsweise solche, die mit anderen Gegenständen oder festen (ortsgebundenen) Substraten (wie Mauern, Kacheln an einer Wand, Holz) verklebt werden können.

Im Falle der Verwendung im Bauwesen und insbesondere einer Verwendung zur Befestigung von Verankerungselementen in einem Loch oder einem Spalt sind als Substrat im Bauwesen übliche Substrate, insbesondere Beton, Mauersteine oder Ziegelsteine, zu nennen. Unter einem Loch oder Spalt ist insbesondere ein Bohrloch zu verstehen. Dieses kann gereinigt (z.B. durch ein- oder mehrmaliges Ausblasen und/oder Bürsten) oder ungereinigt der erfindungsgemäßen Verwendung bzw. dem erfindungsgemäßen Verfahren zugeführt werden.

Unter Verankerungselementen sind insbesondere solche aus Metall, z.B. Hinterschneidanker, Gewindestangen, Schrauben, Bohranker, Bolzen, oder ferner einem anderen Material, wie Kunststoff oder Holz, zu verstehen.

Beim Befestigen eines Verankerungselementes in einen Spalt oder ein Loch werden vor oder in dem Spalt oder Loch Komponente (A) und Komponente (B) (insbesondere mittels einer Zweikammerkartusche mit Statikmischer) miteinander vermischt und gleichzeitig oder anschließend der verklebende Abschnitt des Verankerungselementes eingeführt, und die erhaltene Mischung wird aushärten gelassen.

Eine weitere Ausführungsform der Erfindung betrifft ein erfindungsgemäßes mehrkomponentiges sil(ox)anbasiertes Klebstoffsystem in Form eines Kits, welches derart konfektioniert ist, dass es reaktionshemmend voneinander abgetrennte Behältnisse aufweist, wovon eines eine Härterkomponente (Komponente (A)) und ein anderes eine damit zu härtende mindestens eine Si-gebundene hydrolysierbare Gruppen tragende und wasserfreie sil(ox)anbasierte Bestandteile umfassende Komponente (Komponente (B)), wie vor- oder nachstehend definiert, beinhaltet, wobei vorzugsweise die genannten Behältnisse aus Metall und/oder Kunststoff bestehen und als Beutel (Sachets), insbesondere Mehr-, wie Zweikammerbeutel mit Trennwänden zwischen den Komponenten, oder Verpackungen aus

Kunststoff- und/oder Metallfolien, wie Eimer, Dosen, Tuben, Döschen, Folienbeutel, Töpfe, Mehrkammerampullen; insbesondere als Mehr-, wie Zwei-kammerkartuschen, vorzugsweise mit Statikmischer, oder Mehr-, wie Zweikammer-Folienbeutel, oder dergleichen (reaktionsinhibierend) voneinander getrennt, jedoch vorzugsweise derart, dass Verpackungseinheiten für Komponente (A) und Komponente (B) gemeinsam in aufeinander abgestimmter Menge z.B. in gemeinsamen Umverpackungen (die z.B. auch aus Holz, Stoff, Papier oder Pappe bestehen können) oder Gebinden vorliegen, doch können die Komponenten auch separat verpackt an den Anwendungsort gebracht werden und erst dort durch Vermischen miteinander in Berührung gebracht und gemischt und die Konstruktionsmassen so ausgehärtet werden können. Im Falle von Mehr-, wie Zweikammer-Folienbeutel ist die Trennwand zwischen den Kammern vorzugsweise derart ausgestaltet, dass sie bei der Anwendung durch Drücken und Kneten durchlässig wird für die zuvor getrennten Komponenten, beispielsweise an einer implementierten Sollbruchstelle durchlässig wird oder aufreißt, und so ein Mischen der Komponenten ermöglicht, wobei die Mischung der Komponenten gleichzeitig oder insbesondere anschließend nach Öffnung eines Ausganges, beispielsweise durch Aufschneiden, Aufreißen oder Drücken, auf zu verklebendes Substrat aufgebracht werden kann bzw. wird.

Besonders bevorzugt sind Zweikammerkartuschen oder Zweikammer-Folienbeutel mit getrennten Räumen für die beiden Komponenten (A) und (B) und im Falle der Kartuschen vorzugsweise einem Statikmischer. Vorzugsweise liegt dabei das Volumenverhältnis der enthaltenen Komponenten (A) und (B) bei (A) : (B) = 1 : 10 bis 10 : 1, insbesondere bei 1 : 5 bis 5 : 1, beispielsweise bei 1 : 3 bis 3 : 1, beispielsweise bei 1 : 2 bis 2 : 1 oder insbesondere 1 : 1.

Eine weitere Ausführungsform der Erfindung betrifft die Herstellung eines erfindungsgemäßen mehrkomponentigen sil(ox)anbasierten Klebstoffsystems, wobei die Komponenten des mehrkomponentigen Systems durch Mischen ihrer Bestandteile getrennt voneinander hergestellt und reaktionsinhibierend voneinander in unterschiedlichen Behältnissen verpackt werden.

Um eine rasche Reaktion und Aushärtung nach dem Mischen der Komponenten (z.B: (A) und (B)) zu ermöglichen, kann das erfindungsgemäße mehrkomponentige sil(ox)anbasierte Klebestoffsystem einen Katalysator enthalten oder nur das oder die katalytisch wirksamen im Härter enthaltenen ein oder mehrere Si-gebundene hydrolysierbare Gruppen und/oder ein oder mehrere Silanolgruppen tragenden Aminosil(ox)ane, wobei der Katalysator die Hydrolyse der hydrolysierbaren Gruppen in der zu härtenden Komponente und damit die Aushärtung fördert, beinhalten. Als Katalysator können übliche Katalysatoren in dem Fachmann bekannter Menge zugesetzt werden, wie z.B. Zinn-Katalysatoren, insbesondere Dialkylzinnverbindungen, z.B. Dioctylzinnoxid, ferner Dibutylzinndilaurat; organische Titanate, wie Bis(ethylacetoacetato)diisobutoxytitan, Bis(acetylacetonato)diisobutoxytitan, Bis(acetylacetonato)diisopropoxytitan oder Bis(ethylacetoacetato)diisopropoxytitan, Zirkon-, Zink- oder Bismut-organische Verbindungen, wie Bis(acetylacetonato)dibutoxyzirkon, oder Gemische von zwei oder mehr davon, wobei vorzugsweise die Gesamtmenge an Katalysator, bezogen auf den fertigen Klebstoff, beispielsweise bei 0,001 bis 5 % liegen kann, z.B. bei 0,005 bis 3 % insbesondere von 0,01 bis 1 %. Besonders bevorzugt sind Ti-Katalysatoren, wie Bis(ethylacetoacetato)diisobutoxytitan, oder Sn-Katalysatoren, wie Di-n-octylzinnoxid, oder Zr-Katalysatoren.

Als Beschleuniger (Katalysatoren) sind außerdem starke Basen geeignet, insbesondere solche, die eine geringe Nucleophilie aufweisen, wie z.B. stickstoffhaltige Verbindungen und insbesondere prim.-, sec.- und/oder tert.-Aminogruppen tragende Amine wie N-Ethyldiisopropylamin, Polyoxyalkylenamine, N,N,N',N'-Tetramethylalkylendiamine, 1,4-Diazabicyclo[2.2.2]octan (DABCO); Amidine wie insbesondere 1,8-Diazabicyclo[5.4.0]undec-7-en (DBU), 1,5-Diazabicyclo-[4.3.0]non-5-en (DBN), 6-Dibutylamino-1,8-diazabicyclo[5.4.0]-undec-7-en, oder Guanidine wie insbesondere Tetramethylguanidin.

Ferner können als Katalysator auch saure Verbindungen eingesetzt werden, wie Phosphorsäure and ihre Ester, Toluolsulfonsäure, Schwefelsäure, Salpetersäure oder auch organische Carbonsäuren, z.B. Essigsäure und Benzoesäure.

Auf den beschleunigenden Charakter des oder der Si-gebundene hydrolysierbare Gruppen und/oder ein oder mehrere Silanolgruppen tragenden Aminosil(ox)ane neben dem Wasser umfassenden Härterkomponente sei hier nochmals hingewiesen. Dies ermöglicht in einer besonderen Ausführungsform, die sich durch extrem gute und lange Lagerstabilität auszeichnet, die Formulierung einer beschleunigerfreien zu härtenden (z.B. (A)-)Komponente mit den Aminosil(ox)anen und/oder Aminosiloxanverbindungen der Härter(z.B. (B))-Komponente als einzigem Beschleuniger.

Auf zu verklebenden Oberflächen oder aus der Luft bei der Anwendung kann auch Wasser vorliegen, das auch zur Härtung der wasserfreien Komponente beitragen kann. Dies soll durch die übrigen Angaben der vorliegenden Offenbarung nicht ausgeschlossen sein.

Der oder die die Aushärtung unter Hydrolyse der hydrolysierbaren Reste fördernden Katalysatoren finden sich in einer speziellen Ausführungsform vorzugsweise nur in Komponente (A), jedoch nicht in Komponente (B) wegen des in letzterer enthaltenen Wassers.

Eine vorteilhafte Ausführungsform der Erfindung bei Katalyse mit Sn-Verbindungen betrifft ein erfindungsgemäßes Klebstoffsystem, das einen Stabilisator für den Katalysator beinhaltet. Als Stabilisator kommen Phosphonsäurederivate, wie Phenyl-, Vinyl oder Alkylphosphonsäure, z.B. Octylphosphonsäure, insbesondere mit Trimethoxymethylsilan umgesetzt, in Betracht. Der oder die Stabilisatoren finden sich vorzugsweise in Komponente (A). Der oder die Stabilisatoren liegen vorzugsweise in einer Menge von 0,01 bis 5, beispielsweise von 0,1 bis 2, insbesondere von 0,2 bis 1 % vor.

In bevorzugten Ausführungsformen ist ein erfindungsgemäßes Klebstoffsystem frei von zinnhaltigen Materialien, wie zinnhaltigen Katalysatoren, beispielsweise aus toxikologischen und ökologischen Gründen. In einer weiteren bevorzugten Ausführungsform ist ein erfindungsgemäßes Klebstoffsystem völlig frei von anderen für die Hydrolyse und Polymerisation hydrolysierbarer Si-gebundene Gruppen tragender Silane katalytisch wirksamen Stoffen außer den Aminosilanen oder Aminosiloxanen in Komponente (B).

"Wasserfrei" bedeutet "im wesentlichen wasserfrei" oder "im Wesentlichen wasserfrei" bedeutet insbesondere, dass die sil(ox)anbasierte Bestandteile umfassende (zu härtende) Komponente nur Spuren von Wasser enthalten darf, so dass nicht mehr als 2 % oder 1% der hydrolysierbaren Gruppen dieser Bestandteilte hydrolysiert werden können. Normalerweise ist die zu härtende Komponente wasserfrei, da eventuelle Spuren von Wasser sonst Spuren der Sil(ox)ane hydrolysieren und so abreagiert sind.

Neben den bisher genannten Bestandteilen können die erfindungsgemäßen Klebstoffsysteme insgesamt oder auch die Härterkomponente (Komponente (B)), wie vor- und nachstehend erwähnt, noch weitere übliche Zusätze beinhalten, wobei dem Fachmann bekannt ist, inwieweit solche Bestandteile mit den in Komponenten einer erfindungsgemäßen zweikomponentigen Konstruktionsmasse nicht vor der Mischung in Berührung kommen dürfen.

Hierzu zählen insbesondere eine oder mehrere Zusätze ausgewählt aus Füllstoffen, Haftvermittlern, Wasserfängern, Weichmachern (welche jedoch vorzugsweise weggelassen werden), Anpastmitteln, Stabilisatoren (z.B. gegen Hitze, oxidativen Abbau oder UV-Strahlung), Verdickern, Wasserretentionsmitteln wie Cellulosederivate, Antioxidantien, Rheologiehilfsmitteln, Thixotropiermitteln, Steuerungsmitteln für die Reaktionsgeschwindigkeit, Netzmitteln, Entschäumern, färbenden Zusätzen und ferner weiteren Additiven.

Als Füllstoff oder Füllstoffe können ein oder mehrere ausgewählt aus Talkum oder insbesondere aus beschichtetem Calciumcarbonat, unbehandeltem oder gefälltem Calciumcarbonat, Zeolithen, oder sonstige übliche Füllstoffe, wie Kreiden, Sand, Quarzsand, Aluminiumsilikate, Aluminiumoxide, Quarzmehl oder dergleichen, die als Pulver, in körniger Form oder in Form von Formkörpern zugesetzt sein können, Verwendung finden, oder andere, wie beispielsweise in WO 02/079341 und WO 02/079293 genannt (die hier diesbezüglich durch Bezugnahme aufgenommen werden), oder Gemische davon, wobei die Füllstoffe ferner oder insbesondere auch silanisiert sein können. Die Füllstoffe können in einer oder in mehreren Komponenten eines erfindungsgemäßen Klebstoffsystems, beispielsweise einer oder beiden Komponenten eines entsprechenden Zweikomponentenkits, vorhanden sein. Zusätzlich oder alternativ können hydraulisch härtbare Füllstoffe, wie Gips (z.B. Anhydrit), Branntkalk oder Zement (z.B. Tonerdeschmelz- oder Portlandzement), Wassergläser oder aktive Aluminiumhydroxide, oder zwei oder mehr davon, als Füllstoff zugesetzt werden. Die Füllstoffe können in beliebigen Formen vorliegen, beispielsweise als Pulver oder Mehl, oder als Formkörper, z.B. in Zylinder-, Ring-, Kugel-, Hohlkugel-, Plättchen-, Stäbchen-, Sattel- oder Kristallform, oder ferner in Faserform, und die entsprechenden Grundteilchen haben vorzugsweise einen maximalen Durchmesser von 0,0001 bis 10 mm. Der Anteil an Füllstoffen beträgt vorzugsweise 0 bis 90 %, beispielsweise 10 bis 50 %.

Beispiele für Haftvermittler sind Aminosilane wie 3-Aminopropyltri(m)ethoxysilan, N-(2-Aminoethyl)-3-aminopropyltri(m)ethoxysilan, N-(2-Aminoethyl)-3-aminopropylmethyl-di(m)ethoxysilan, Bis-(3-tri(m)ethoxysilylpropyl)amin, N-Cyclohexyl-3-aminopropyltri(m)ethoxysilan, Phenylaminomethyltri(m)ethoxysilan, Phenylaminopropyltri(m)ethoxysilan, oder 3-[2-(2-Aminoethylamino)ethylamino]propyltri(m)ethoxysilan, Epoxysilane, wie Glycidoxypropyltri(m)ethoxysilane, Glycidoxypropylmethyldi(m)ethoxysilan, N-(3-Tri(m)ethoxysilylpropyl)-harnstoff, N-(Tri(m)ethoxysilylmethyl)-harnstoff, N-(Methyldi(m)ethoxysilylmethyl)-harnstoff, O-(M)ethylcarbamatomethylmethyldi(m)ethoxysilan, 3-Methacryloxypropyl-tri(m)ethoxysilan, Methacryloxymethyl-methyldi(m)ethoxysilan, 3-Acryloxypropyltri(m)ethoxysilan, Acryloxymethyl-tri(m)ethoxysilan, Acryloxymethylmethyldi(m)ethoxysilane sowie deren Teil- und/oder Mischkondensate. Die Haftvermittler sind, wenn vorhanden, bevorzugt zu 0,1 bis zu 15 %, typischerweise aber im Bereich 0,5-7 % bezogen auf die Gesamtmasse enthalten.

Bei den gegebenenfalls eingesetzten Wasserfängern kann es sich um beliebige, für durch Silankondensation härtende Systeme beschriebene Wasserfänger handeln. Beispiele sind Silane wie Vinyltri(m)ethoxysilan, Vinylmethyldi(m)ethoxysilan, O-(M)ethylcarbamatomethyl-methyldi(m)ethoxysilan, O-(M)ethylcarbamatomethyl-tri(m)ethoxysilan, und/oder deren Teilkondensate sowie Orthoester, wie 1,1,1-Tri(m)ethoxyethan oder Tri(m)ethoxymethan. Die zu härtende Komponente (z.B. Komponente (A) kann, bezogen auf die Masse der zu härtenden Komponente selbst, bis zu 5 % Wasserfänger enthalten, typischerweise werden 0,5-3 % eingesetzt.

Zu den Weichmachern und Anpastmitteln zählen Anpastmittel auf Glykolbasis und insbesondere Polyethylenglykole oder Polypropylenglykole oder Comonomere von Propylenglykol und Ethylenglykol, oder Gemische von zwei oder mehr davon. Diese sind vorzugsweise in einer oder der Härterkomponente vorgesehen und haben, bezogen auf alle Bestandteile der Härterkomponente außer der Verpackung, Gewichtsanteile von insgesamt 0 bis 80 %, vorzugsweise von 1 bis 50 %.

Als Stabilisatoren kommen UV-Absorber, wie z.B. Benzotriazole, Radikalfänger, wie 4-Methoxyphenol oder insbesondere "Hindered Amine Light Stabilisatoren" (HALS), oder dergleichen in Frage. Diese können beispielsweise in einem Anteil von 0,01 oder 0,1 bis 10, vorzugsweise von 0.2 bis 5 %, vorgesehen sein. Sie werden vorzugsweise der Komponente (A) zugesetzt.

Als Verdicker können in allen Varianten der Erfindung beispielsweise Schichtsilikate, Rizinusölderivate, Polyamidwachse, Celluloseether oder insbesondere (hydrophiles oder vorzugsweise hydrophobisiertes) amorphes Siliciumdioxid (z.B. (insbesondere hydrophobisierte) pyrogene Kieselsäure) beinhaltet sein, z.B. in einem Anteil von 0,5 bis 10, vorteilhaft von 0,5 bis 8 %, beispielsweise von 1 bis 5 % vorhanden sein, vorzugsweise in einem Anteil von 0.2 bis 6 %, vorzugsweise von 0,5 bis 5 %, insbesondere von 1 bis 3 %, jeweils bezogen auf die Gesamtmasse des Klebstoffsystems ohne Verpackung.

Antioxidantien, wie z.B. sterisch gehinderte Phenolderivate, z.B. Gallate, tert-Butylhydrochinon, Butylhydroxyanisol Butylhydroxytoluol, können ebenfalls zugesetzt sein, beispielsweise in Mengen von 0 bis 5 %.

Als Rheologiehilfsmittel können insbesondere Polyamidwachse, hydrierte Rizinusöle oder Stearate sowie pyrogene Kieselsäuren (auch oberflächenbehandelt) sowie ferner Polyurethan- oder acrylatbasierte Rheologiehilfsmittel zugesetzt sein. Besonders bevorzugt sind hydrophobe pyrogene Kieselsäure (die auch als Verdicker klassifiziert sein kann).

Solche Rheologiehilfsmittel können beispielsweise fehlen oder in Massenanteilen von 0,01 oder 0.1 bis 10 % zugesetzt sein.

An Steuerungsmitteln für die Reaktionsgeschwindigkeit sind in erster Linie die vorstehend bereits als Katalysatoren genannten Verbindungen zu erwähnen.

Als färbende Zusätze können Pigmente oder lösliche Farbstoffe zugesetzt sein, wie Eisenpigmente oder Schwarzpigment (Ruß) - bei unterschiedlicher Anfärbung der Komponenten kann dies zur Kontrolle der Homogenität bei der Mischung von Komponenten beim Kleben nützlich sein. Solche färbenden Zusätze können in einem Anteil von 0 oder beispielsweise 0,01 bis 2 % vorgesehen sein. Vorteilhaft enthält eine der Komponenten einen färbenden Zusatz (Farbstoff und/oder Pigment), was ermöglicht, eine möglichst gleichförmige Durchmischung zu kontrollieren (anhand sich beim Mischen ausformender gleichmäßiger Färbung) und so zu erzielen.

Weitere vorteilhafte Ausführungsformen der Erfindung finden sich in den Ansprüchen, vorzugsweise den abhängigen Ansprüchen, die hier in die Beschreibung durch Bezugnahme inkorporiert sind.

### Beispiele:

Die nachfolgenden Beispiele dienen der Illustration der Erfindung, ohne ihren Umfang einzuschränken - sie sind jedoch zugleich bevorzugte Ausführungsformen insbesondere hinsichtlich der verwendeten Inhaltsstoffe.

### Beispiel (I): Exemplarische und Vergleichs-Folienbeutel-Rezepturen für spezielle erfindungsgemäße zweikomponentige sil(ox)anbasierte Klebstoffsysteme

Zur Herstellung der exemplifizierten A- und B-Komponenten wurden die jeweiligen Rohstoffe in einem Speedmixer gemischt.

### Komponente A:

| Rohstoff | Funktion | Einwaage [Masse %] |
|---|---|---|
| Geniosil XB-502 | Reaktivkomponente | 72,6 |
| Gemahlenes Calciumcarbonat 5 µm | Füllstoff | 21,7 |
| Hydrophobe Kieselsäure | Verdicker | 3,9 |
| Starke, nicht nucleophile Base | Katalysator | 0,4 |
| Vinyltrimethoxysilan | Wasserfänger | 0,9 |
| Tinuvin 123 | Stabilisator | 0,5 |

### Komponente B:

| Rohstoff | Funktion | Vergleichsbeispiel 1 [%] | Vergleichsbeispiel2 [%] | Erfindungsgemäßes Beispiel 1 [%] |
|---|---|---|---|---|
| Wasser | Härter | 31 | 14 | |
| Voranol P 400 | Anpastmittel (Po-lypropylenglykol) | | 60 | 11,35 |
| Silquest VS-142 | Wässriger Amino-Oligosiloxan-Härter | | | 23,3 |
| Gecoatetes Calciumcarbonat 6 µm | Füllstoff | 68,5 | 25,5 | 64,85 |
| Schwarzpigment | Färbemittel | 0,5 | 0,5 | 0,5 |
| Mischungsverhältnis mit A-Komponente (A:Bw/w) | - | 8,9:1 | 4:1 | 4:1 |

Im Vorfeld wurden Zweikammer-Folienbeutel hergestellt. Die Komponenten wurden im angegebenen Mischungsverhältnis in je eine Kammer eingefüllt und anschließend die Folie verschweißt.

Zur Anwendung wurde die A-Komponente durch Druck auf den Folienbeutel und unter Versagen einer Sollbruch-Schweißnaht in die Komponente B gedrückt und durch fünfmaliges Walken über eine Tischkante die Komponenten vermischt. Nach dem Aufreißen der Folienbeutel wurden mit den durchmischten Klebstoffen sandgestrahlte Stahlprüfkörper (100 x 25 x 2 mm) verklebt.

Schon beim Auftrag der Klebstoffe fiel optisch (dank des Färbemittels) auf, dass die Durchmischung der beiden 4:1-Varianten wesentlich besser war als beim Vergleichsbeispiel 1, was aus dem günstigeren Mischungsverhältnis resultiert.

Die Zugscherfestigkeit wurde gemäß ISO 4587:2003-03 nach 2 h und nach 24 h Aushärtezeit bei 23 °C mit einer Universalprüfmaschine Z010 von Zwick GmbH & Co. KG bestimmt. Folgende Werte wurden ermittelt:

| | Zugscherfestigkeit 2 h [MPa] | Zugscherfestigkeit 24 h [MPa] |
|---|---|---|
| Vergleichsbeispiel 1 | 0,3 | 0,6 |
| Vergleichsbeispiel 2 | 0,2 | 1,1 |
| Erfindungsgemäßes Beispiel 1 | 1,1 | 3,3 |

Es wird deutlich, dass die Leistungsfähigkeit bei hohem Mischungsverhältnis nur sehr gering ist, was vermutlich auf ungenügende Verteilung und Durchmischung des Härterkomponente in der A-Komponente zurückzuführen ist. Zwar konnte durch Einsatz eines Anpastmittels ein günstigeres Mischungsverhältnis erreicht werden, was sich in besseren Zugscherfestigkeiten zeigt. Bei gleichem Mischungsverhältnis konnten die Zugscherfestigkeiten jedoch noch deutlich gesteigert werden, indem Anpastmittel (das vermutlich auch als Weichmacher wirkt) durch den erfindungsgemäßen Einsatz eines wässrigen Amino-Sil(ox)ans anteilig ersetzt wurde.

### Beispiel (II): Exemplarische und Vergleichs-Kartuschen-Rezepturen für spezielle erfindungsgemäße zweikomponentige sil(ox)anbasierte Klebstoffsysteme

Zur Herstellung der hier exemplifizierten A- und B-Komponenten wurden die jeweiligen Rohstoffe in einem Speedmixer gemischt.

### Komponente A:

| Rohstoff | Funktion | Einwaage [%] |
|---|---|---|
| Geniosil XB-502 | Reaktivkomponente | 87,5 |
| Dynasilan 1146 | Silan-Haftvermittler | 7 |
| Hydrophobe Kieselsäure | Verdicker | 3 |
| Vinyltrimethoxysilan | Wasserfänger | 0,5 |
| Additivmischung mit einem HALS-Stabilisator und einer sehr starken, nicht nucleophilen Base | Stabilisator und Katalysator | 2 |

### Komponente B:

| Rohstoff | Funktion | VB 3 [%] | Erfindungs -gemäßes Beispiel 2 [%] | Erfindungsgemäßes Beispiel 3 [%] | Erfindungsgemäßes Beispiel 4 [%] |
|---|---|---|---|---|---|
| Wasser | Härter | 3,2 | | | |
| Voranol P400 | Anpastmittel (Polypropylen-glykol) | 33 | 31 | 25 | |
| Silquest VS-142 | Wässriger Amino-Oligosiloxan-Härter | | 5,2 | | |
| Hydrosil 2907 | Wässriges Siloxan mit Amino- und Vinylfunktionalitäten | | | 5,2 | |
| Hydrosil 2776 | Wässriges Siloxan mit Diaminofunktionalitäten | | | | 5,2 |
| Gemahlenes Calciumcarbonat 5 µm | Füllstoff | 61,3 | 61,3 | 61,3 | 61,3 |
| Hydrophobe Kieselsäure | Verdicker | 2 | 2 | 2 | 2 |
| Schwarzpigment | Färbemittel | 0,5 | 0,5 | 0,5 | 0,5 |
| Mischungsverhältnis mit A-Komponente | - | 1:1 | 1:1 | 1:1 | 1:1 |

Die jeweiligen Komponenten werden in eine 1:1-Spritze gefüllt und über einen Statikmischer ausgepresst. Alle Klebstoffe treten sehr gut gemischt aus dem Statikmischer aus. Die Auspresskräfte der erfindungsgemäßen Beispiele sind mit 125-140 N deutlich geringer als die des Vergleichsbeispiels mit 165 N. Die Auspresskraft wird mit einer Auspressgeschwindigkeit von 150 mm/min auf einer Universalprüfmaschine Z010 von Zwick GmbH & Co. KG bestimmt.

Mit den vermischten Klebstoffen wurden sandgestrahlte Stahlprüfkörper (100 x 25 x 2 mm) verklebt. Die Zugscherfestigkeit wird gemäß ISO 4587:2003-03nach 2 h, 24 h und 7 d Aushärtezeit bei 23 °C mit einer Universalprüfmaschine Z010 von Zwick GmbH & Co. KG bestimmt. Folgende Werte wurden ermittelt:

| | Zugscherfestigkeit 2 h [MPa] | Zugscherfestigkeit 24 h [MPa] | Zugscherfestigkeit 7 d [MPa] |
|---|---|---|---|
| Vergleichsbeispiel 3 | 0,8 | 2,1 | 3,5 |
| Erfindungsgemäßes Beispiel 2 | 1,3 | 2,9 | 4,0 |
| Erfindungsgemäßes Beispiel 3 | 1,1 | 3,0 | 4,3 |
| Erfindungsgemäßes Beispiel 4 | 1,5 | 3,1 | 4,2 |

## Patentansprüche

1. Mehrkomponentiges sil(ox)anbasiertes Klebstoffsytem, welches eine Härterkomponente, welche neben Wasser ein Aminosil(ox)an, das jeweils ein oder mehrere Si-gebundene hydrolysierbare Gruppen und/oder ein oder mehrere Silanolgruppen trägt, umfasst, und eine auch oder nur mit dem im Härter enthaltenen Wasser zu härtende mindestens eine Si-gebundene hydrolysierbare Gruppe tragende und wasserfreie sil(ox)anbasierte Bestandteile umfassende Komponente beinhaltet.

2. Mehrkomponentiges sil(ox)anbasiertes Klebstoffsystem gemäß Anspruch 1, wobei die wasserfreie sil(ox)anbasierte Bestandteile umfassende Komponente auch einen Katalysator für die Hydrolyse und Aushärtung beinhaltet.

3. Mehrkomponentiges sil(ox)anbasiertes Klebstoffsystem gemäß Anspruch 2, wobei der Katalysator zinnfrei ist.

4. Mehrkomponentiges sil(ox)anbasiertes Klebstoffsystem gemäß einem der Ansprüche 1 bis 3, wobei es sich bei dem Aminosil(ox)an, das jeweils ein oder mehrere Si-gebundene hydrolysierbare Gruppen und/oder ein oder mehrere Silanolgruppen trägt,
(i) um ein oder mehrere Monomere und/oder ein damit hergestelltes oligomeres Siloxan handelt, wobei das oder die Monomere ausaus N-(2-Aminoethyl)-3-aminopropyltri(m)ethoxysilan, N-(2-Aminoethyl)-3-aminopropylmethyl-di(m)ethoxysilan, 3-Aminopropyltri(m)ethoxysilan, N-Cyclohexyl-3-aminopropyltri(m)ethoxysilan, Phenylaminomethyltri(m)ethoxysilan, Phenylaminopropyltri(m)ethoxysilan, oder 3-[2-(2-Aminoethylamino)ethylamino]propyltri(m)ethoxysilan, oder Kombinationen von zwei oder mehr davon, ausgewählt sind, und/oder
(ii) um ein Produkt der Co-Oligomerisierung eines oder mehrerer der genannten Monomere mit ein oder mehreren anderen funktionellen Silanen neben ein oder mehrere Aminogruppen tragenden Silanen, insbesondere Vinylalkoxysilanen und/oder Mono-, Di- oder Trialkylalkoxysilanen, handelt; oder Mischungen von zwei oder mehr der genannten Aminosil(ox)ane vorliegen.

5. Mehrkomponentiges sil(ox)anbasiertes Klebstoffsystem gemäß einem der Ansprüche 1 bis 4, wobei als Aminosil(ox)an, das jeweils ein oder mehrere Si-gebundene hydrolysierbare Gruppen und/oder ein oder mehrere Silanolgruppen trägt, ein prähydrolysiertes gamma-Aminopropylsilsesquioxan-Oligomer in wässriger Lösung umfasst ist, welches Moleküle der Formel (H₂NCH₂CH₂CH₂SiO_{1,5}⁾ₐ (mit a > 1) beinhaltet.

6. Mehrkomponentiges sil(ox)anbasiertes Klebstoffsystem gemäß einem der Ansprüche 1 bis 4 oder insbesondere 5, wobei als Aminosil(ox)an, das jeweils ein oder mehrere Si-gebundene hydrolysierbare Gruppen und/oder ein oder mehrere Silanolgruppen trägt, ein Siloxan mit ein oder mehren Aminofunktionen oder mit ein- oder mehreren Aminofunktionen und ein oder mehreren Vinyl- und/oder Alkylfunktionalitäten umfassendes Sil(ox)an beinhaltet ist.

7. Mehrkomponentiges sil(ox)anbasiertes Klebstoffsystem gemäß einem der Ansprüche 1 bis 6, wobei die zu härtende ein oder mehrere Si-gebundene hydrolysierbare Gruppen tragende und wasserfreie sil(ox)anbasierte Bestandteile umfassende Komponente ausgewählt ist aus einer solchen, die mindestens ein silanterminiertes Präpolymer und/oder mindestens eine hydrolysierbare an Si gebundene Gruppe beinhaltende Silikonharze beinhaltet.

8. Mehrkomponentige sil(ox)anbasierte Masse für Klebezwecke gemäß Anspruch 7, wobei das oder die silanterminierten Präpolymeren ausgewählt sind aus
- Mono, Di- oder Trialkoxysilan-terminierten Polyethern (vorzugsweise des Ethylenglykols und/oder insbesondere des Propylenglykols), die am endständigen Sauerstoff des Polyetheranteils, vorzugsweise an beiden Enden, jeweils eine Gruppe der Teilformel (II)
-C(=O)-NH-(CH₂)ₜ -Si(R^{1*}R^{2*}R^{3*}) (II)
tragen, worin R^{1*}, R^{2*} und R^{3*} unabhängig voneinander Alkyl, insbesondere Ethyl oder in erster Linie Methyl, oder einen hydrolysierbaren Rest bedeuten, insbesondere Ethoxy oder in erster Linie Methoxy, mit der Maßgabe, dass mindestens einer bis zu drei dieser Reste einen hydrolysierbaren Rest bedeuten, insbesondere zwei dieser Reste einen hydrolysierbaren Rest bedeuten, und t = 1 bis 6, vorzugsweise 2 oder insbesondere 3 oder 1 ist, wobei eine endständige Gruppe ausgewählt aus N-Triethoxysilyloxymethylcarbamoyl, N-Trimethoxysilyloxypropylcarbamoyl oder N-Dimethoxy-methylsilyloxymethylcarbamoyl (-C(=O)-NH-CH₂ -Si(Me)(OCH₃)₂) besonders bevorzugt ist;
- MS-Polymeren, die aus Mono, Di- oder Trialkoxysilan-terminierten Polyethern (vorzugsweise des Ethylenglykols und/oder insbesondere des Propylenglykols) bestehen, die am endständigen Sauerstoff des Polyetheranteils, vorzugsweise an beiden Enden, jeweils eine Gruppe der Teilformel (III)
-(CH₂)ₜ -Si(R^{1*}R^{2*}R^{3*}) (III)
tragen, worin R^{1*}, R^{2*} und R^{3*} unabhängig voneinander Alkyl, insbesondere Ethyl oder in erster Linie Methyl, oder einen hydrolysierbaren Rest bedeuten, insbesondere Ethoxy oder in erster Linie Methoxy, mit der Maßgabe, dass mindestens einer bis zu drei dieser Reste einen hydrolysierbaren Rest bedeuten, insbesondere zwei dieser Reste einen hydrolysierbaren Rest bedeuten, und t = 1 bis 6, vorzugsweise 3 ist;
- Silanterminierten Polyurethan(präpolymer)en (SPUR), wie Polyurethanpräpolymeren mit mindestens einer Gruppe der Teilformel (IV)
-NH-C(=O)-NH-(CH₂)ₜ -Si(R^{1*}R^{2*}R^{3*}) (IV)
wobei in Formel (IV) t, R^{1*}, R^{2*} und R^{3*} jeweils die oben für Teilformel (II) genannten Bedeutungen haben; und
- Endgecappten Polydialkylsiloxanen, wie endgecappte Polydiethoxy oder insbesondere Polydimethoxysiloxanen, wobei "endgecappt" bedeutet, dass die Verbindungen anstelle einer endständigen Hydroxygruppe des enthaltenen Polyialkoxysiloxans jeweils eine Gruppe der Teilformel (V),
-O-Si(R^{1**}R^{2**}R^{3**}) (V)
tragen, worin R^{1**}, R^{2**} und R^{3**} unabhängig voneinander Alkyl, insbesondere Ethyl oder in erster Linie Methyl, oder einen hydrolysierbaren Rest bedeuten, insbesondere Ethoxy, Acetoxy- oder in erster Linie Methoxy, mit der Maßgabe, dass mindestens einer dieser Reste einen hydrolysierbaren Rest bedeutet, insbesondere zwei oder vorzugsweise alle drei Reste einen hydrolysierbaren Rest bedeuten, besonders bevorzugt Triethoxysilyloxy oder insbesondere Trimethoxysilyloxy (-O-Si-(OCH₃)₃) oder Dimethoxymethylsilyloxy (-O-Si(Me)(OCH₃)₂);
- und/oder die mindestens eine hydrolysierbare an Si gebundene Gruppe beinhaltenden Silikonharze solche in Form von Phenyl- und/oder Methylsilikonharzen, welche bezogen auf die Masse an Silikonharz (b) insgesamt (= 100 %), 0 bis 65 % Struktureinheiten mit phenylfunktionellen T-Einheiten, 0 bis 95 % an methylfunktionellen T- und/oder D-, insbesondere T-Einheiten und 5 bis 40 % hydrolysierbare, an Si gebundene Gruppen beinhalten, daneben noch Q- und M-Einheiten enthalten, sind.

9. Mehrkomponentiges siloxanbasiertes Klebstoffsystem gemäß Anspruch 8, worin das oder die silanterminierten Polymeren als Gemisch aus Mono, Di- oder Trialkoxysilan-terminierten Polyethern und mindestens eine hydrolysierbare an Si gebunden beinhaltenden Silikonharzen in Form von Phenyl- und/oder Methylsilikonharzen beinhaltet sind.

10. Mehrkomponentiges sil(ox)anbasiertes Klebstoffsystem nach einem der vorstehenden Ansprüche 1 bis 9, welches eine Härterkomponente (B) und eine auch oder nur mit dem im Härter enthaltenen Wasser zu härtende Si-gebundene hydrolysierbare Gruppen tragende und wasserfreie sil(ox)anbasierte Bestandteile umfassende Komponente (A) beinhaltet, wobei die Härterkomponente neben Wasser ein Aminosil(ox)an, das jeweils ein oder mehrere Si-gebundene hydrolysierbare Gruppen und/oder ein oder mehrere Silanolgruppen trägt, umfasst, **dadurch gekennzeichnet, dass** Komponente (A) ein Gemisch (Reaktivabmischung) von (i) Mono-, Di- oder Trialkoxysilanterminierten Polyethern des Ethylenglykols und/oder des Propylenglykols und (ii) von mindestens eine hydrolysierbare an Si gebundene Gruppen beinhaltenden Silikonharzen in Form von Phenyl- und/oder Methylsilikonharzen beinhaltet.

11. Mehrkomponentiges sil(ox)anbasiertes Klebstoffsystem nach einem der Ansprüche 1 bis 10, beinhaltend hydrophiles oder vorzugsweise hydrophobisiertes amorphes Siliciumdioxid in einem Anteil von 0.2 bis 6 %, vorzugsweise von 0,5 bis 5 %, insbesondere von 1 bis 3 %, jeweils bezogen auf die Gesamtmasse des Klebstoffsystems ohne Verpackung.

12. Mehrkomponentiges siloxanbasiertes Klebstoffsystem nach einem der Ansprüche 1 bis 11, welche als Zweikomponentensystem ausgeführt ist, insbesondere als Zweikammer-Folienbeutel oder als Zweikammerkartusche mit Statikmischer ausgeführt ist.

13. Mehrkomponentiges sil(ox)anbasiertes Klebstoffsystem gemäß einem der vorstehenden Ansprüche, wobei die hydrolysierbaren Gruppen ausgewählt sind aus an Si gebundenem Halo, Ketoximato, Acyloxy oder insbesondere Alkoxy sind.

14. Verwendung eines mehrkomponentigen sil(ox)anbasierten Klebstoffsystems nach einem der Ansprüche 1 bis 13 als Beschichtungsmittel oder insbesondere zum Verkleben von Oberflächen zu verklebender Substrate.

15. Verfahren zum Verkleben von Oberflächen zu verklebender Substrate und damit von Gegenständen mit jeweils mindestens einer dieser Oberflächen, wobei die Komponenten eines mehrkomponentigen sil(ox)anbasierten Klebstoffsystems, wie in einem der Ansprüche 1 bis 13 definiert, vermischt und das Gemisch auf die ganzen oder mindestens Teile mindestens einer der zu verklebenden Oberflächen aufgebracht und die zu verklebenden Oberflächen miteinander in Kontakt gebracht werden.
